(19) Europäisches Patentamt
European Patent Office
Office européen des brevets

(11) **EP 4 471 452 A1**

(12) **EUROPEAN PATENT APPLICATION**
published in accordance with Art. 153(4) EPC

(43) Date of publication:
**04.12.2024 Bulletin 2024/49**

(21) Application number: **22924045.2**

(22) Date of filing: **09.11.2022**

(51) International Patent Classification (IPC):
**G01S 7/481** (2006.01)          **G01S 17/34** (2020.01)

(52) Cooperative Patent Classification (CPC):
**G01S 7/481; G01S 17/34**

(86) International application number:
**PCT/JP2022/041785**

(87) International publication number:
**WO 2023/145191 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.01.2022 JP 2022010910**

(71) Applicant: **Panasonic Intellectual Property
Management Co., Ltd.
Kadoma-shi, Osaka 571-0057 (JP)**

(72) Inventors:
• **TAKAGI, Hiroyuki
Kadoma-shi, Osaka 571-0057 (JP)**

• **INADA, Yasuhisa
Kadoma-shi, Osaka 571-0057 (JP)**
• **HISADA, Kazuya
Kadoma-shi, Osaka 571-0057 (JP)**
• **KATO, Yumiko
Kadoma-shi, Osaka 571-0057 (JP)**
• **NARUMI, Kenji
Kadoma-shi, Osaka 571-0057 (JP)**
• **KIKUCHI, Kohei
Kadoma-shi, Osaka 571-0057 (JP)**

(74) Representative: **Grünecker Patent- und
Rechtsanwälte
PartG mbB
Leopoldstraße 4
80802 München (DE)**

(54) **MEASUREMENT DEVICE**

(57)     A measurement device includes: a light source; an interference optical system that separates light from the light source into reference light and irradiation light and causes reflected light generated by the irradiation light being reflected by an object and the reference light to interfere with each other to generate interference light; an optical element that emits the irradiation light and receives the reflected light; and a photodetector that detects the interference light. The interference optical system includes a beam splitter to which the light from the light source is input and from which the reference light and the irradiation light are output. The measurement device satisfies relationships $d1 \leq d2 + d3$ and $|d2 + d3 - d1| \geq |d4 - d1|$, where $d1$ is an optical path length from the beam splitter to the photodetector, $d2$ is an optical path length from the beam splitter to the optical element, $d3$ is an optical path length from the optical element to the photodetector, and $d4$ is an optical path length from the beam splitter to the photodetector via a noise light path inside the interference optical system.

FIG. 5

**Description**

Technical Field

The present disclosure relates to a measurement device.

Background Art

Conventionally, there is a light detection and ranging (LiDAR) technology for generating measurement data regarding the distance and/or the speed of an object by irradiating the object with light and detecting reflected light from the object. A typical example of a measurement device using the LiDAR technology has a light source, a photodetector, and a processing circuit. The light source emits light for irradiating an object. The photodetector detects a reflected wave from the object and outputs a signal corresponding to a time delay of the reflected wave. The processing circuit generates measurement data regarding the distance and the speed of the object by, for example, a frequency modulated continuous wave (FMCW) technology, on the basis of the signal output from the photodetector. PTLS 1, 2, and NPL 1 disclose examples of measurement devices using the FMCW technology.

Citation List

Patent Literature

PTL 1: Japanese Patent No. 6274368
PTL 2: Japanese Unexamined Patent Application Publication No. 2019-45200 Non Patent Literature

NPL 1: Christopher V. P. et. al., OFC2016, W4E.3

Summary of Invention

Technical Problem

The present disclosure provides a measurement device having a wide measurement range.
Solution to Problem
A measurement device according to an aspect of the present disclosure includes: a light source; an interference optical system that separates light from the light source into reference light and irradiation light for irradiating an object and causes reflected light, generated by at least part of the irradiation light being reflected by the object, and the reference light to interfere with each other to generate interference light; at least one optical element that emits the at least part of the irradiation light and receives the reflected light; and a photodetector that detects the interference light. The interference optical system includes a beam splitter having a first terminal to which the light from the light source is input, a second terminal from which the reference light is output, and a third terminal from which the irradiation light is output. The measurement device satisfies relationships of
[Math. 1]

$$d1 \leq D \quad (D = d2 + d3) \qquad (1)$$

[Math. 2]

$$|D - d1| \geq |d4 - d1| \qquad (2)$$

where d1 is an optical path length of a first path extending from the second terminal of the beam splitter to the photodetector, d2 is an optical path length of a second path extending from the third terminal of the beam splitter to the optical element, d3 is an optical path length of a third path extending from the optical element to the photodetector, and d4 is an optical path length of a fourth path extending from the third terminal of the beam splitter to the photodetector via a noise light path inside the interference optical system.

Note that general or specific embodiments of the present disclosure may be implemented as a system, a device, a method, an integrated circuit, a computer program, a computer-readable recording medium such as a recording disk, or any selective combination of the system, the device, the method, the integrated circuit, the computer program, and the recording medium. The computer-readable recording medium may include a nonvolatile recording medium, such as a compact disc-read only memory (CD-ROM). The device may include one or more devices. When the device includes two or more devices, the two or more devices may be disposed in one apparatus or may be disposed separately in two or more separate apparatuses. In the present specification and claims, "device" may mean not only one device, but also a system including a plurality of devices.

Advantageous Effects of Invention

According to the technique of the present disclosure, a measurement device having a wide measurement range can be realized.

Brief Description of Drawings

[Fig. 1] Fig. 1 is a block diagram schematically showing the configuration of a measurement device according to a first exemplary embodiment of the present disclosure.
[Fig. 2] Fig. 2 is a diagram schematically showing changes in the frequencies of reference light and reflected light with time when an object is stationary.
[Fig. 3] Fig. 3 is a flowchart schematically showing an example of a measurement operation performed by a processing circuit in the first embodiment.
[Fig. 4] Fig. 4 is a graph showing a spectrum of a detection signal in a comparative example.
[Fig. 5] Fig. 5 is a diagram for explaining optical path lengths between components included in the measurement device according to the first embodiment.
[Fig. 6] Fig. 6 is a graph showing a spectrum of a detection signal in an example.
[Fig. 7] Fig. 7 is a block diagram schematically showing the configuration of a modification of the measurement device according to the first embodiment.
[Fig. 8] Fig. 8 is a block diagram schematically showing the configuration of a measurement device according to a second exemplary embodiment of the present disclosure.
[Fig. 9] Fig. 9 is a block diagram schematically showing the configuration of a measurement device according to a third exemplary embodiment of the present disclosure.
[Fig. 10] Fig. 10 is a flowchart schematically showing an example of a measurement operation performed by a processing circuit in the third embodiment.
[Fig. 11] Fig. 11 is a graph showing a signal spectrum in a comparative example.
[Fig. 12] Fig. 12 is a diagram for explaining optical path lengths between components included in the measurement device according to the third embodiment. Description of Embodiments

In the present disclosure, all or some of circuits, units, devices, members, or parts, or all or some of functional blocks in a block diagram may be implemented by one or more electronic circuits including, for example, a semiconductor device, a semiconductor integrated circuit (IC), or a large scale integration (LSI). The LSI or the IC may be integrated into one chip or may be formed by combining a plurality of chips. For example, functional blocks other than a memory element may be integrated into one chip. Although the term "LSI" or "IC" is used here, the term "system LSI", "very large scale integration (VLSI)", or "ultra large scale integration (ULSI)" may be used depending on the degree of integration. A field programmable gate array (FPGA) programmed after the manufacture of the LSI, or a reconfigurable logic device that allows reconfiguring of the connection relationship inside the LSI or setting up of circuit sections inside the LSI can also be used for the same purpose.

Furthermore, all or some of the functions or operations of the circuits, units, devices, members, or parts can be performed by software processing. In this case, the software is recorded in one or more non-transitory recording media such as a ROM, an optical disk, and a hard disk drive. When the software is executed by a processor, the function specified by the software is executed by the processor and a peripheral device. The system or the device may include one or more non-transitory recording media in which the software is recorded, a processor, and a required hardware device, for example, an interface.

In the present disclosure, the term "light" means not only visible light (wavelengths: about 400 nm to about 700 nm), but also electromagnetic waves including ultraviolet rays (wavelengths: about 10 nm to about 400 nm) and infrared rays (wavelengths: about 700 nm to about 1 mm). In the present specification, ultraviolet rays are also referred to as "ultraviolet light", and infrared rays are also referred to as "infrared light".

Hereinbelow, exemplary embodiments of the present disclosure will be described. Note that the embodiments described below are all comprehensive or specific examples. Numerical values, shapes, components, positions and connection forms of the components, steps, the order of the steps, and the like described in the following embodiments are merely examples, and are not intended to limit the present disclosure. Furthermore, among the components in the following embodiments, components not described in any of the independent claims indicating the broadest concept are described as arbitrary components. The drawings are schematic views and are not necessarily illustrated accurately. Furthermore, in the drawings, substantially the same components are denoted by the same reference numerals, and redundant description may be omitted or simplified.

First, the underlying knowledge forming the basis of the present disclosure will be described. In recent years, the FMCW-LiDAR technology has been developed which achieves both a wide dynamic range and a high resolution with respect to distance, is less likely to be affected by disturbance, and can detect the speed of an object moving at a high speed. By using light instead of millimeter waves, the spot diameter of light irradiating an object can be made relatively small, and measurement data of the object can be acquired more accurately.

In a measurement device using the FMCW-LiDAR technology, internal scattered light may be generated. PTL 1 discloses a method for accurately measuring distance by using internal scattered light generated in an optical antenna that emits light to the outside as a trigger for starting measurement. The internal scattered light disclosed in PTL 1 can be used to improve the distance measurement accuracy. Meanwhile, the present inventor has found that multiple scattered light that is considered to be generated inside an optical component exists in a measurement device using the FMCW-LiDAR technology, in addition to the internal scattered light disclosed in PTL 1, and such multiple scattered light can reduce the distance measurement range.

In the measurement device according to an embodiment of the present disclosure using the FMCW-LiDAR technology, the influence of multiple scattered light can be reduced by appropriately designing the optical path lengths between internal components, making it possible to increase the distance measurement range. A measurement device according to an embodiment of the present disclosure will be described below.

A measurement device according to a first aspect includes: a light source; an interference optical system that separates light from the light source into reference light and irradiation light for irradiating an object and causes reflected light, generated by at least part of the irradiation light being reflected by the object, and the reference light to interfere with each other to generate interference light; at least one optical element that emits the at least part of the irradiation light and receives the reflected light; and a photodetector that detects the interference light. The interference optical system includes a beam splitter having a first terminal to which the light from the light source is input, a second terminal from which the reference light is output, and a third terminal from which the irradiation light is output. The measurement device satisfies relationships of

[Math. 1]

$$d1 \leq D \quad (D = d2 + d3) \qquad (1)$$

[Math. 2]

$$|D - d1| \geq |d4 - d1| \qquad (2)$$

where d1 is an optical path length of a first path extending from the second terminal of the beam splitter to the photodetector, d2 is an optical path length of a second path extending from the third terminal of the beam splitter to the optical element, d3 is an optical path length of a third path extending from the optical element to the photodetector, and d4 is an optical path length of a fourth path extending from the third terminal of the beam splitter to the photodetector via a noise light path inside the interference optical system.

With this measurement device, it is possible to reduce the influence of multiple scattered light generated inside the interference optical system to increase the distance measurement range.

In the measurement device according to a second aspect, in the measurement device according to the first aspect, the interference optical system includes an optical circulator. The optical circulator is connected to the third terminal of the beam splitter and the at least one optical element. The photodetector is connected to the second terminal of the beam splitter and the optical circulator. The noise light path is a path passing through the optical circulator.

With this measurement device, it is possible to reduce the influence of multiple scattered light generated inside the optical circulator to increase the distance measurement range.

In the measurement device according to a third aspect, in the measurement device according to the first aspect, the interference optical system the interference optical system includes another beam splitter. The other beam splitter is connected to the third terminal of the beam splitter and the at least one optical element. The photodetector is connected to the second terminal of the beam splitter and the other beam splitter. The noise light path is a path passing through the other beam splitter.

With this measurement device, it is possible to reduce the influence of multiple scattered light generated inside the other beam splitter to increase the distance measurement range.

In the measurement device according to a fourth aspect, in the measurement device according to any one of the first to third aspects, the at least one optical element includes a plurality of optical elements, and the plurality of optical elements each emit part of the irradiation light. In the measurement device, the plurality of optical elements each satisfy the relationships of Formula (1) and Formula (2).

This measurement device can increase the distance measurement range even when there are a plurality of optical elements.

A measurement device according to a fifth aspect includes: a light source; an interference optical system that separates light from the light source into reference light and irradiation light for irradiating an object and causes reflected light, generated by at least part of the irradiation light being reflected by the object, and the reference light to interfere with each other to generate interference light; at least one optical element that emits the at least part of the irradiation light and receives the reflected light; a photodetector that detects the interference light; and another photodetector. The interference optical system includes a beam splitter having a first terminal to which the light from the light source is input, a second terminal from which the reference light is output, and a third terminal from which the irradiation light is output. The other photodetector detects part of the irradiation light from the third terminal of the beam splitter to the optical element. The measurement device satisfies relationships of

[Math. 1]

$$d1 \leq D \quad (D = d2 + d3) \qquad (1)$$

[Math. 3]

$$|D - d1| \geq |D' - d1| \quad (D' = d5 + d6) \qquad (3)$$

where d1 is an optical path length of a first path extending from the second terminal of the beam splitter to the photodetector, d2 is an optical path length of a second path extending from the third terminal of the beam splitter to the optical element, d3 is an optical path length of a third path extending from the optical element to the photodetector, d5 is an optical path length of a fifth path extending from the third terminal of the beam splitter to the other photodetector, and d6 is an optical path length of a sixth path extending from the other photodetector to the photodetector.

With this measurement device, it is possible to reduce the influence of light reflected by the other photodetector to increase the distance measurement range.

The measurement device according to a sixth aspect, in the measurement device according to any one of the first to fifth aspects, further includes a processing circuit that processes a signal output from the photodetector. The light source is capable of changing a frequency of the light.

This measurement device can measure the distance and/or the speed using the FMCW-LiDAR technology.

A measurement device according to a seventh aspect includes a light source; an interference optical system that separates light from the light source into reference light and irradiation light for irradiating an object and causes reflected light, generated by at least part of the irradiation light being reflected by the object, and the reference light to interfere with each other to generate interference light; at least one optical element that emits the at least part of the irradiation light and receives the reflected light; and a photodetector that detects the interference light. The measurement device satisfies a relationship of

[Math. 4]

$$f1 \geq f2 \qquad (4)$$

where f1 is a beat frequency caused by interference between the reference light and, of the irradiation light, light reflected by the optical element and reaching the photodetector, and f2 is a beat frequency caused by interference between the reference light and, of the irradiation light, light passing through a noise light path inside the interference optical system and reaching the photodetector.

With this measurement device, it is possible to reduce the influence of multiple scattered light generated inside the interference optical system to increase the distance measurement range.

In the measurement device according to an eighth aspect, in the measurement device according to the seventh aspect, the interference optical system includes an optical circulator that inputs the at least part of the irradiation light to the at least one optical element and inputs the reflected light to the photodetector. The noise light path is a path passing through the optical circulator.

With this measurement device, it is possible to reduce the influence of multiple scattered light generated inside the optical circulator to increase the distance measurement range.

In the measurement device according to a ninth aspect, in the measurement device according to the seventh aspect, the interference optical system includes another beam splitter. The other beam splitter inputs the at least part of the irradiation light to the at least one optical element and inputs the reflected light to the photodetector. The noise light path is a path passing through the other beam splitter.

With this measurement device, it is possible to reduce the influence of multiple scattered light generated inside the other beam splitter to increase the distance measurement range.

In the measurement device according to a tenth aspect, the at least one optical element includes a plurality of optical elements, and the plurality of optical elements each emit part of the irradiation light. In the measurement device, the plurality of optical elements each satisfy the relationship of Formula (4).

This measurement device can increase the distance measurement range even when there are a plurality of optical elements.

A measurement device according to an eleventh aspect includes a light source; an interference optical system that separates light from the light source into reference light and irradiation light for irradiating an object and causes reflected light, generated by at least part of the irradiation light being reflected by the object, and the reference light to interfere with each other to generate interference light; at least one optical element that emits the at least part of the irradiation light and receives the reflected light; a photodetector that detects the interference light; and another photodetector that detects part of the irradiation light from the interference optical system to the optical element. The measurement device satisfies a relationship of

[Math. 5]

$$f1 \geq f3 \qquad (5)$$

where f1 is a beat frequency caused by interference between the reference light and, of the irradiation light, light reflected by the optical element and reaching the photodetector, and f3 is a beat frequency caused by interference between the reference light and, of the irradiation light, light leaving the other photodetector and reaching the photodetector.

With this measurement device, it is possible to reduce the influence of light reflected by the other photodetector to increase the distance measurement range.

The measurement device according to a twelfth aspect, in the measurement device according to any one of the seventh to eleventh aspects, further includes a processing circuit that processes a signal output from the photodetector. The light source is capable of changing a frequency of the light.

This measurement device can measure the distance and/or the speed using the FMCW-LiDAR technology.

(First Embodiment)

[Measurement Device]

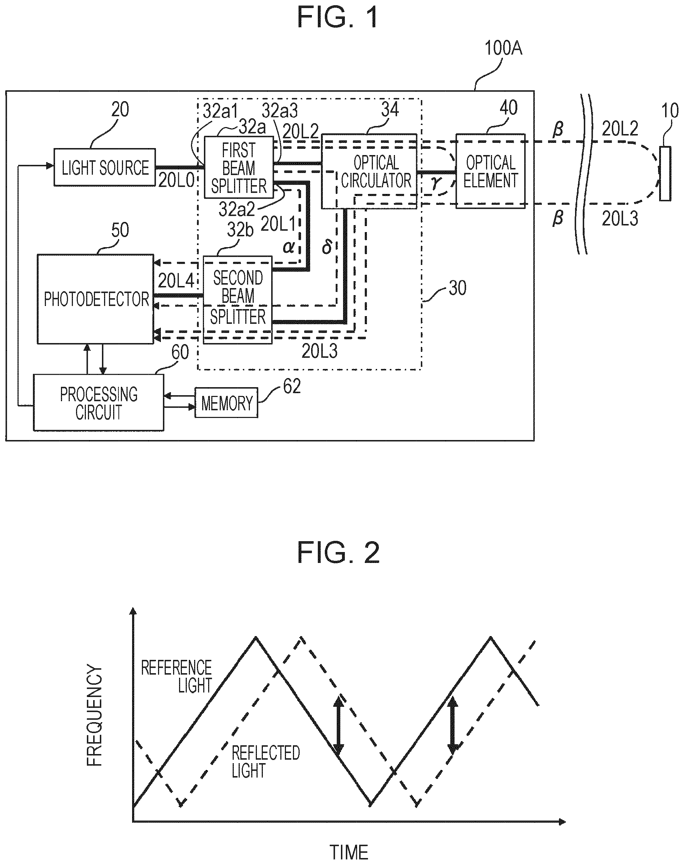

First, an example configuration of a measurement device according to a first embodiment of the present disclosure will be described with reference to Fig. 1. Fig. 1 is a block diagram schematically showing the configuration of the measurement device according to the first exemplary embodiment of the present disclosure. In Fig. 1, an object 10 to be measured is shown. A measurement device 100A shown in Fig. 1 includes a light source 20, an interference optical system 30, an optical element 40, a photodetector 50, a processing circuit 60, and a memory 62. The interference optical system 30 includes a first beam splitter 32a, a second beam splitter 32b, and an optical circulator 34. The bold lines shown in Fig. 1 represent optical fibers connecting two components to each other. The solid lines with arrows shown in Fig. 1 represent transmission and reception of signals. The dashed lines with arrows shown in Fig. 1 represent flows of light.

As will be described below, it is considered that multiple scattered light is generated in the optical circulator 34, and this can reduce the distance measurement range. In the measurement device 100A according to the first embodiment, the influence of such multiple scattered light can be reduced by appropriately designing the optical path lengths between the internal components, making it possible to increase the distance measurement range. Specific conditions for reducing the influence of the multiple scattered light will be described in detail below.

The components of the measurement device 100A will be described below.

The light source 20 emits a laser beam 20L0. The light source 20 can change the frequency of the laser beam 20L0. The frequency can be changed with time in, for example, a triangular-wave shape or a sawtooth shape, at constant time intervals. The time intervals may be, for example, greater than or equal to 1 $\mu$s and less than or equal to 10 ms. The time intervals may vary. The frequency may be changed in the range of, for example, greater than or equal to 100 MHz and less than or equal to 1 THz. The wavelength of the laser beam 20L0 may be included in the wavelength range of near-infrared light, which is, for example, greater than or equal to 700 nm and less than or equal to 2000 nm. Because sunlight includes near-infrared light and visible light, and the amount of near-infrared light is smaller than the amount of visible light, the use of near-infrared light as the laser beam 20L0 can reduce the influence of sunlight as noise. The wavelength of the laser beam 20L0 does not necessarily have to be included in the wavelength range of the near-infrared light. The wavelength of the laser beam 20L0 may be included in the wavelength range of visible light, which is greater than or equal to 400 nm and less than or equal to 700 nm, or may be included in the wavelength range of ultraviolet light. The light source 20 may include, for example, a distributed feedback laser diode or an external cavity laser diode. These laser diodes are inexpensive and compact, are capable of single-mode oscillation, and are capable of changing the frequency of the laser beam 20L0 in accordance with the amount of current applied.

The first beam splitter 32a included in the interference optical system 30 separates the laser beam 20L0 emitted from the light source 20 into reference light 20L1 and irradiation light 20L2 for irradiating the object 10. The first beam splitter 32a further inputs the reference light 20L1 to the second beam splitter 32b and inputs the irradiation light 20L2 to the optical circulator 34. The first beam splitter 32a has a first terminal 32a1 to which the laser beam 20L0 is input, a second terminal 32a2 from which the reference light 20L1 is output, and a third terminal 32a3 from which the irradiation light 20L2 is output.

The optical circulator 34 included in the interference optical system 30 inputs the irradiation light 20L2 to the optical element 40, and inputs reflected light 20L3, generated by irradiating the object 10 with the irradiation light 20L2, to the second beam splitter 32b. The optical circulator 34 is connected to the third terminal 32a3 of the first beam splitter 32a, the second beam splitter 32b, and the optical element 40.

The second beam splitter 32b included in the interference optical system 30 inputs interference light 20L4, obtained by superimposing the reference light 20L1 and the reflected light 20L3 to produce interference, to the photodetector 50. Similarly to the first beam splitter 32a, the second beam splitter 32b has three terminals that are used for input of the reference light 20L1 and the reflected light 20L3 and output of the interference light 20L4.

The optical element 40 emits the irradiation light 20L2 to the outside and receives the reflected light 20L3. In the present specification, the direction in which the irradiation light 20L2 is emitted from the optical element 40 is also referred to as "forward". The optical element 40 may be, for example, a collimator lens that collimates the irradiation light 20L2. In the present specification, "collimate" means not only a case where the irradiation light 20L2 is made into parallel light, but also a case where spreading of the irradiation light 20L2 is reduced. Alternatively, the optical element 40 may be a diffraction grating that emits the irradiation light 20L2 to the outside as zeroth-order diffracted light and/or $\pm$Nth-order diffracted light (N is a positive integer). By measuring the distance of the object 10 with multiple diffracted light emitted in different directions, the angular range in the distance measurement of the object 10 can be increased. In the following description, the optical element 40 is assumed to be a collimator lens.

In the measurement device 100A, the path of the irradiation light 20L2 from the interference optical system 30 to the object 10 and the path of the reflected light 20L3 from the object 10 to the interference optical system 30 overlap each other. By employing a coaxial optical system like this, the configuration of the measurement device 100A can be simplified, and stable measurement can be realized.

The photodetector 50 detects the interference light 20L4. The photodetector 50 includes one or more light detecting elements. The light detecting element outputs a signal corresponding to the intensity of the interference light 20L4. The photodetector 50 is connected to the second terminal 32a2 of the first beam splitter 32a and the optical circulator 34 via the second beam splitter 32b.

The processing circuit 60 controls the operations of the light source 20 and the photodetector 50. The processing circuit 60 uses the FMCW-LiDAR technology to process signals output from the photodetector 50. The processing circuit 60 generates and outputs measurement data regarding the distance and/or the speed of the object 10 on the basis of the signals. The operation of the processing circuit 60 will be described in detail below.

The computer program executed by the processing circuit 60 is stored in the memory 62, which is a ROM or a RAM (Random Access Memory). As described above, the measurement device 100A includes a processor including the processing circuit 60 and the memory 62. The processing circuit 60 and the memory 62 may be integrated on one circuit board or may be provided on separate circuit boards. The control and signal processing functions of the processing circuit 60 may be distributed to a plurality of circuits. The processor may be located at a remote location away from the other components and control the operations of the light source 20 and the photodetector 50 via a wired or wireless communication network.

[FMCW-LiDAR Technology]

Next, the FMCW-LiDAR technology will be briefly described with reference to Fig. 2. Details of the FMCW-LiDAR technology are disclosed in, for example, NPL 1.

Fig. 2 is a diagram schematically showing changes in the frequencies of the reference light 20L1 and the reflected light 20L3 with time when the object 10 is stationary. The solid line represents the reference light 20L1, and the dashed line represents the reflected light 20L3. The frequency of the reference light 20L1 shown in Fig. 2 repeatedly changes in a triangular-wave shape with time. That is, the frequency of the reference light 20L1 repeats up-chirping and down-chirping. The increase in the frequency during an up-chirp period and the decrease in the frequency during a down-chirp period are equal to each other. The frequency of the reflected light 20L3 is shifted in the positive direction along the time axis, compared with the frequency of the reference light 20L1. The amount of time by which the reflected light 20L3 is shifted is equal to the time required for the irradiation light 20L2 to be emitted from the measurement device 100A to the outside and reflected by the object 10, and to return as the reflected light 20L3. As a result, the interference light 20L4, obtained by superimposing the reference light 20L1 and the reflected light 20L3 to produce interference, has a frequency equivalent to the frequency difference between the frequency of the reflected light 20L3 and the frequency of the reference light 20L1. The double-headed arrows shown in Fig. 2 indicate the frequency difference between the two. The photodetector 50 outputs a signal indicating the intensity of the interference light 20L4. The signal is called a beat signal. The frequency of the beat signal, i.e., the beat frequency, is equal to the frequency difference. The processing circuit 60 can generate measurement data regarding the distance of the object 10 from the beat frequency.

When the object 10 is stationary, the beat frequency in the up-chirp period and the beat frequency in the down-chirp period are equal to each other. The beat frequency $f_{beat}$ during the up-chirp period or the down-chirp period is expressed by Formula (6) below,
[Math. 6]

$$f_{beat} = \frac{2\Delta f}{c\Delta t} d \qquad (6)$$

where $\Delta f$ is the increment or decrement of the frequency of light during the up-chirp period or the down-chirp period, $\Delta t$ is the time required for $\Delta f$ to change, c is the speed of light, and 2d is the difference between the optical path length of the reference light 20L1 and the sum of the optical path length of the irradiation light 20L2 and the optical path length of the reflected light 20L3.

The beat frequency $f_{beat}$ in Formula (6) is obtained by multiplying the rate of change $\Delta f/\Delta t$ of the frequency with respect to time by the time (2d/c) required for the irradiation light 20L2 to be emitted from the measurement device 100A to the outside and reflected by the object 10, and to return as the reflected light 20L3.

When the object 10 moves, the frequency of the reflected light 20L3 is Doppler-shifted in the positive or negative direction along the frequency axis, compared with the frequency of the reference light 20L1. In that case, the beat frequency in the up-chirp period and the beat frequency in the down-chirp period are different from each other. The processing circuit 60 can generate measurement data regarding the speed and the distance of the object 10 from the frequency difference and the average of the beat frequencies, respectively.

[Operation Performed by Processing Circuit 60]

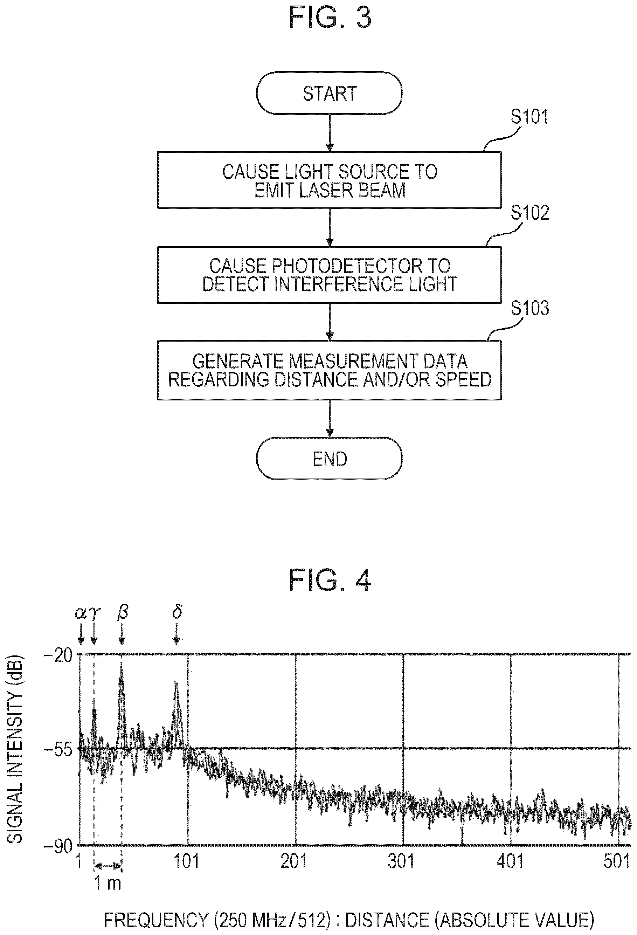

Next, an example operation performed by the processing circuit 60 in the first embodiment will be described with reference to Fig. 3. Fig. 3 is a flowchart schematically showing an example measurement operation performed by the processing circuit 60. The processing circuit 60 performs the operations of steps S101 to S103 shown in Fig. 3.

<Step S101>

The processing circuit 60 causes the light source 20 to emit the laser beam 20L0 whose frequency changes with time.

<Step S102>

The processing circuit 60 causes the photodetector 50 to detect the interference light 20L4. The photodetector 50 outputs a signal corresponding to the intensity of the interference light 20L4.

<Step S103>

The processing circuit 60 generates measurement data regarding the distance and/or the speed of the object 10 on the basis of the signal output from the photodetector 50.

This operation of the processing circuit 60 enables the distance measurement and/or the speed measurement of the object 10.

[Flow of Light in Measurement Device 100A]

Reference is made to Fig. 1 again. In the measurement device 100A shown in Fig. 1, a plurality of flows of light are generated, as indicated by the dashed lines with arrows. The flow of light $\alpha$ is the flow of the reference light 20L1 leaving the second terminal 32a2 of the first beam splitter 32a and reaching the photodetector 50. The flow of light $\beta$ is the flow of the irradiation light 20L2 leaving the third terminal 32a3 of the first beam splitter 32a and reaching the object 10, and is the flow of the reflected light 20L3 leaving the object 10 and reaching the photodetector 50.

Meanwhile, in addition to the flows of light $\alpha$ and $\beta$, there are flows of light $\gamma$ and $\delta$ that cause noise in the detection signal, among the plurality of flows of light. The flow of light $\gamma$ is the flow of part of the irradiation light 20L2 leaving the third terminal 32a3 of the first beam splitter 32a, reflected by the optical element 40, and reaching the photodetector 50. Such reflection occurs at the interface between the optical element 40 and air. The flow of light $\delta$ is the flow of another part of the irradiation light 20L2 leaving the third terminal 32a3 of the first beam splitter 32a, passing through a noise light path inside the optical circulator 34, and reaching the photodetector 50. The noise light path is considered to be a path passing through the optical circulator 34, more specifically, a path in the optical circulator 34 through which leakage light of the irradiation light 20L2 traveling toward the optical element 40 travels while being multiply scattered inside. The optical path length of the noise light path caused by the internal multiple scattering is, for example, about 10 to 100 times longer than the shortest distance from the point in the optical circulator 34 where the irradiation light 20L2 is input to the point where the reflected light 20L3 is output.

As described above, part of the irradiation light 20L2 is reflected by the optical element 40, and another part is multiply scattered inside the optical circulator 34. Hence, the remaining part of the irradiation light 20L2 is actually emitted from the optical element 40 to the outside. Note that, in the present specification, unless misunderstanding occurs, the description "the optical element 40 emits the irradiation light 20L2 to the outside" is used.

Referring to Fig. 4, it will be described, with a comparative example, that the flow of light $\gamma$ does not affect the distance measurement range, whereas the flow of light $\delta$ can reduce the distance measurement range. In the comparative example, the distance of the object 10 was measured with the following measurement device. The measurement device includes the components shown in Fig. 1, but does not satisfy the conditions described below for reducing the influence of multiple scattered light. In the comparative example, the distance from the optical element 40 to the object 10 was 1 m. In the present specification, the distance from the optical element 40 to the object 10 means the distance from the position where the optical element 40 reflects the above-mentioned part of the irradiation light 20L2 to the position where the object 10 reflects the above-mentioned remaining part of the irradiation light 20L2.

Fig. 4 is a graph showing a spectrum of a detection signal in the comparative example. The vertical axis and the horizontal axis shown in Fig. 4 represent the intensity of the signal and the frequency, respectively. For the horizontal axis, the left end represents zero frequency and one tick mark represents 250 MHz/512. The frequency corresponds to the distance. In Fig. 4
, the spectrum of the detection signal in the up-chirp period and the spectrum of the detection signal in the down-chirp period are shown in an overlapping manner. When the object 10 is stationary, the behaviors of the two are substantially the same.

As shown in Fig. 4, a plurality of peaks appear in the spectrum of the detection signal. Arrows shown in Fig. 4 indicate four representative peaks among them. The peak $\alpha$ has the beat frequency between the reference light 20L1 and the reference light 20L1, that is, zero frequency. The peak $\beta$ has the beat frequency obtained by interference between the reference light 20L1 and the reflected light 20L3 that is reflected by the object 10 and reaches the photodetector 50. The peak $\gamma$ has the beat frequency obtained by interference between the reference light 20L1 and, of the irradiation light 20L2, light reflected by the optical element 40 and reaching the photodetector 50. The peak $\delta$ has the beat frequency obtained by interference between the reference light 20L1 and, of the irradiation light 20L2, light passing through the noise light path inside the interference optical system 30, more specifically, inside the optical circulator 34 and reaching the photodetector 50.

The peak $\beta$ is caused by the reflected light 20L3 reflected by the object 10. The peak $\gamma$ is noise and is caused by light, in the irradiation light 20L2, that is reflected by the optical element 40. Because the object 10 is located in front of the optical element 40, assuming that the position where the optical element 40 reflects the irradiation light 20L2 is zero distance, the peak $\gamma$ serves as the indicator of zero distance, although it is noise. Because the beat frequency of the peak $\gamma$ is lower than the beat frequency of the peak $\beta$, the peak $\gamma$ does not affect the peak $\beta$. In the example shown in Fig. 4, the difference between the beat frequency of the peak β and the beat frequency of the peak γ corresponds to a distance of 1 m.

The peak δ is noise and is caused by the multiple scattered light generated inside the optical circulator 34. The beat frequency of the peak δ is higher than the beat frequency of the peak γ, and the difference between the two corresponds to a distance of 3.5 m. When the distance from the optical element 40 to the object 10 is about 3.5 m, the peak β and the peak δ are close to each other. So, it is not easy to determine which peak is the peak β. This leads to a problem in that the distance of the object 10 cannot be accurately measured in the frequency band near the peak δ, narrowing the distance measurement range.

[Conditions for Reducing Influence of Multiple Scattered Light]

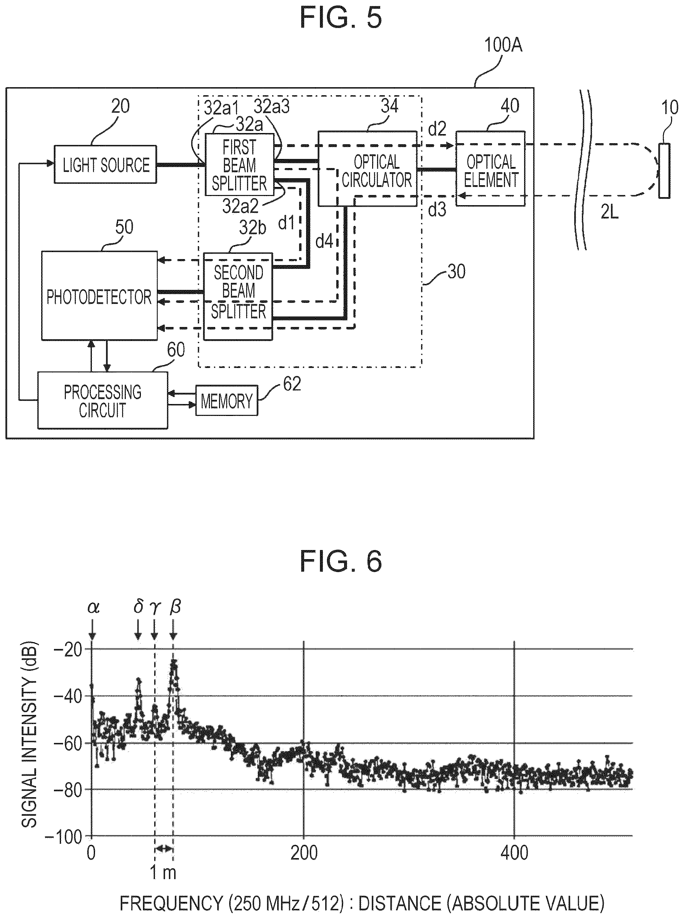

Referring to Fig. 5, the conditions to be satisfied by the measurement device 100A to solve the above problem will be described below. Fig. 5 is a diagram for explaining the optical path lengths between the components included in the measurement device 100A according to the first embodiment. The optical path length of a first path extending from the second terminal 32a2 of the first beam splitter 32a to the photodetector 50 is assumed to be a first optical path length d1. The optical path length of a second path extending from the third terminal 32a3 of the first beam splitter 32a to the optical element 40 is assumed to be a second optical path length d2. The optical path length of a third path extending from the optical element 40 to the photodetector 50 is assumed to be a third optical path length d3. The optical path length of a fourth path extending from the third terminal 32a3 of the first beam splitter 32a to the photodetector 50 via the noise light path inside the interference optical system 30, more specifically, inside the optical circulator 34, is assumed to be a fourth optical path length d4. The outgoing/return distance between the optical element 40 and the object 10 is assumed to be 2L.

It is the flows of light γ and δ shown in Fig. 1 that cause noise in the detection signal. The optical path length of the flow of light γ is the sum of the second optical path length and the third optical path length, that is, D = d2 + d3. The optical path length of the flow of light δ is the fourth optical path length d4. In the spectrum of the detection signal, if the beat frequency of the peak γ is higher than the beat frequency of the peak δ, the peak β and the peak δ are not close to each other. Thus, the above-described problem does not occur, and the distance measurement range of the object 10 can be increased. The conditions satisfied by the optical path lengths in the measurement device 100A according to the first embodiment are expressed by Formulas (7) and (8) below.

[Math. 7]

$$d1 \leq D \qquad (7)$$

[Math. 8]

$$|D - d1| \geq |d4 - d1| \qquad (8)$$

Formula (7) means that the optical path length D of the flow of light γ is longer than the first optical path length d1 of the flow of light α. Formula (8) means that the beat frequency of the peak γ is higher than the beat frequency of the peak δ. On the right side of Formula (8), the fourth optical path length d4 of the flow of light δ may be longer or shorter than the first optical path length d1 of the flow of light α. Because the optical path length of the flow of light β is longer than the optical path length D of the flow of light γ by 2L, the beat frequency of the peak β is higher than the beat frequency of the peak γ. Therefore, the peak γ does not affect the peak β.

Instead of Formula (8), Formula (9) may be used, where f1 is the beat frequency of the peak γ, and f2 is the beat frequency of the peak δ.

[Math. 9]

$$f1 \geq f2 \qquad (9)$$

In the measurement device 100A according to the first embodiment, because the relationships of Formulas (7) to (9) are satisfied, it is possible to reduce the influence of multiple scattered light inside the interference optical system 30, and to increase the distance measurement range.

Next, an example in which the distance of the object 10 was measured by using the measurement device 100A according to the first embodiment will be described with reference to Fig. 6. Fig. 6 is a graph showing a spectrum of a detection signal in the example. The vertical axis and the horizontal axis shown in Fig. 6 are the same as the vertical axis and the horizontal axis shown in Fig. 4, respectively. As shown in Fig. 6, the beat frequency of the peak γ is higher than the beat frequency of the peak δ, and the beat frequency of the peak β is higher than the beat frequency of the peak γ. Therefore, in the example, the peak β and the peak δ are not close to each other, and the distance measurement range of the object 10 can be increased as compared with the comparative example.

[Method for Calibrating Measurement Device 100A]

A method for calibrating the measurement device 100A according to the first embodiment is as follows. In a configuration in which the distance from the optical element 40 to the object 10 is, for example, 1 m, and the reflectivity of the object 10 with respect to the irradiation light 20L2 is, for example, 10% or more, the object 10 is measured. The object 10 for calibration may be, for example, a silver diffuser. In this configuration, the optical path lengths D and d1 are adjusted so that the relationships of Formulas (7) to (9) are satisfied. The optical path length D can be adjusted by, for example, increasing or decreasing the length of the optical fiber connecting the optical circulator 34 and the optical element 40 to each other. Similarly, the first optical path length d1 can be adjusted by, for example, increasing or decreasing the length of the optical fiber connecting the first beam splitter 32a and the second beam splitter 32b to each other. By winding the optical fibers, a large space is not required even if the optical path length D and/or d1 is increased.

When there are a plurality of noise light paths inside the interference optical system 30, a plurality of peaks δ appear in the spectrum of the detection signal. In that case, the optical path length of the path extending from the third terminal 32a3 of the first beam splitter 32a to the photodetector 50 via the longest noise light path inside the interference optical system 30 may be selected as the fourth optical path length d4. Similarly, the highest beat frequency among the beat frequencies of the plurality of peaks δ may be selected as the beat frequency f2.

Unlike the above-described example, when the object 10 moves, the beat frequency in the up-chirp period and the down-chirp period shown in Fig. 2 is $f0 \pm fd$, as a result of being shifted from the frequency f0, which corresponds to the distance of the object 10, by the Doppler frequency fd, which depends on the speed of the object 10. In that case, the distance L from the optical element 40 to the object 10 is adjusted to satisfy $f0 - fd \geq f1$.

(Modification of First Embodiment)

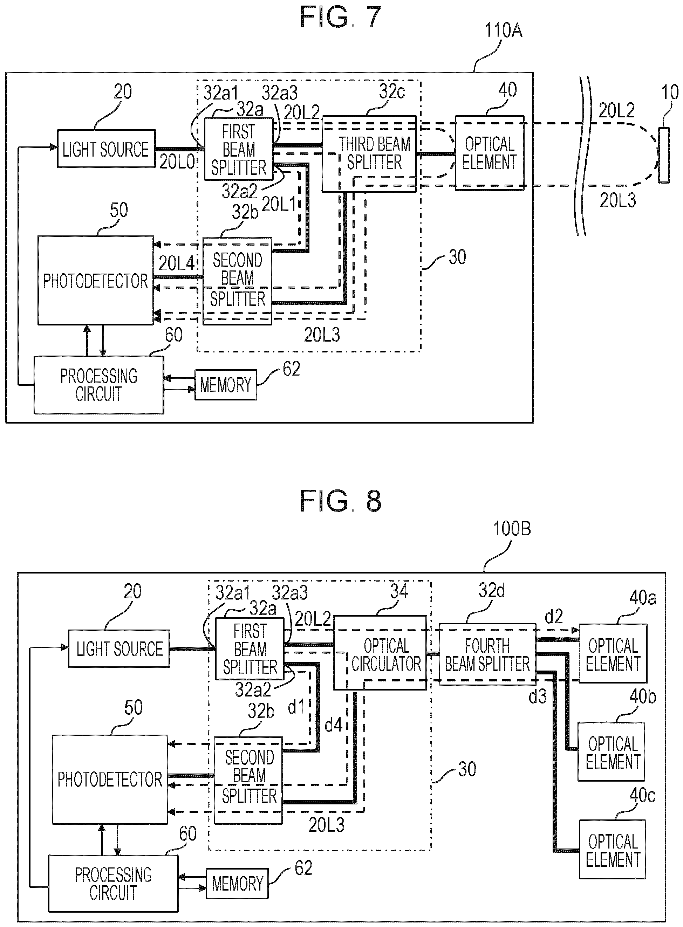

Next, a modification of the measurement device 100A according to the first embodiment of the present disclosure will be described with reference to Fig. 7. Fig. 7 is a block diagram schematically showing the configuration of the modification of the measurement device according to the first embodiment. A measurement device 110A shown in Fig. 7 differs from the measurement device 100A shown in Fig. 1 in that the interference optical system 30 includes a third beam splitter 32c, instead of the optical circulator 34 shown in Fig. 1. Similarly to the optical circulator 34, the third beam splitter 32c is connected to the third terminal 32a3 of the first beam splitter 32a, the second beam splitter 32b, and the optical element 40. In the measurement device 110A, the noise light path is a path passing through the optical circulator 34. In the present specification, the first beam splitter 32a is also referred to as "a beam splitter", and the third beam splitter 32c is also referred to as "another beam splitter". The third beam splitter 32c inputs the irradiation light 20L2 to the optical element 40. The optical circulator 34 inputs the reflected light 20L3 to the second beam splitter 32b. Note that, in the third beam splitter 32c, part of the reflected light 20L3 may return to the light source 20 via the first beam splitter 32a. Such return light may be removed by providing an optical isolator between the light source 20 and the first beam splitter 32a. Also in the measurement device 110A, as in the measurement device 100A, the distance measurement range can be increased.

(Second Embodiment)

Next, a configuration example of a measurement device according to a second embodiment of the present disclosure will be described with reference to Fig. 8. Fig. 8 is a block diagram schematically showing the configuration of the measurement device according to the second exemplary embodiment of the present disclosure. The object 10 shown in Fig. 1 is omitted. A measurement device 100B shown in Fig. 8 differs from the measurement device 100A shown in Fig. 1 in that the measurement device 100B includes a fourth beam splitter 32d, a first optical element 40a, a second optical element 40b, and a third optical element 40c, instead of the single optical element 40 shown in Fig. 1. In the present specification, the first optical element 40a, the second optical element 40b, and the third optical element 40c are also collectively referred to as the "optical elements 40a to 40c". The fourth beam splitter 32d is connected to the optical circulator 34. The optical elements 40a to 40c are connected to the fourth beam splitter 32d. It can also be said that the optical elements 40a to 40c are connected to the optical circulator 34 via the fourth beam splitter 32d.

The fourth beam splitter 32d splits the irradiation light 20L2 into first to third light. The optical elements 40a to 40c respectively emit the first to third light to the outside and receive first to third reflected light generated by the first to third light being reflected by the object 10. Each of the first to third light is part of the irradiation light 20L2. The outputs of the first to third light may be equal to each other or may be different from each other. The number into which the fourth beam splitter 32d splits the irradiation light is not limited and is any plural number that is two or more. The same applies to the number of optical elements 40a to 40c.

The optical path lengths of the three paths extending from the fourth beam splitter 32d to the optical elements 40a to 40c may be equal to each other or may be different from each other. When the optical path lengths of the three paths are different from each other, the zero distances of the first to third light emitted to the outside from the optical elements 40a to 40c can be made different from each other. Therefore, in the spectrum of the detection signal, first to third frequency bands can be allocated to the first to third light emitted to the outside, respectively. As a result, it is possible to know, from the frequency band in which the peak appears, which light, among the first to third light, has been used to measure the distance of the object 10.

When each of the optical elements 40a to 40c satisfies the relationships of Formulas (7) to (9), the distance measurement range of the measurement device 100B according to the second embodiment can also be increased, similarly to the measurement device 100A according to the first embodiment. Note that, the second path and the third path pass through the fourth beam splitter 32d. When the optical element having the shortest total D of the second optical path length d2 and the third optical path length d3, among the optical elements 40a to 40c, satisfies the relationships of Formulas (7) to (9), the remaining optical elements consequentially satisfy the relationships of Formulas (7) to (9). In the example shown in Fig. 8, the optical element having the shortest total D of the second optical path length d2 and the third optical path length d3 is the first optical element 40a.

(Third Embodiment)

[Measurement Device]

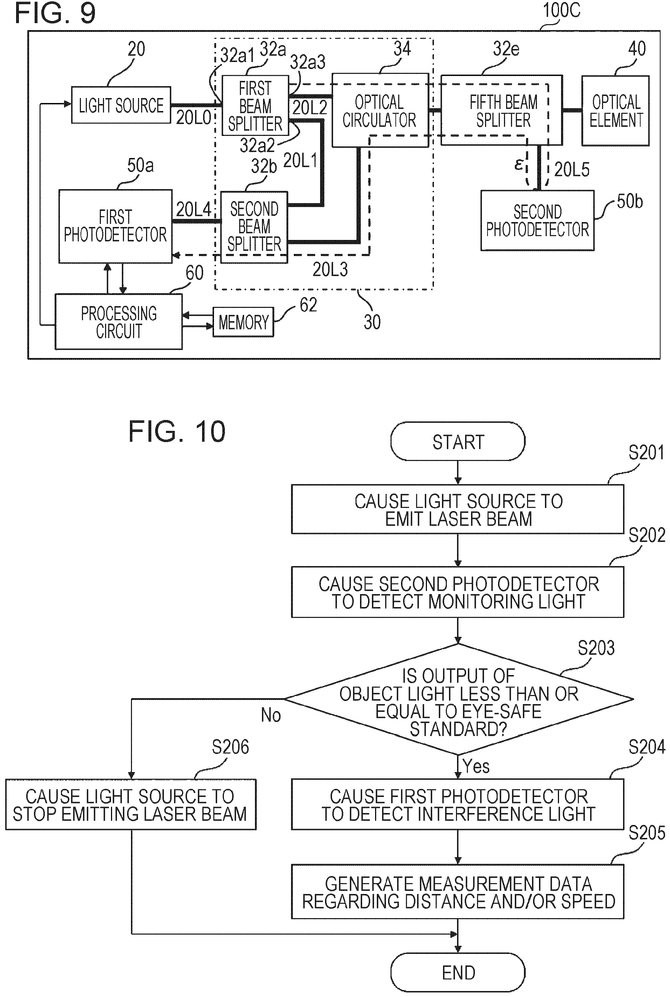

Next, a configuration example of a measurement device according to a third embodiment of the present disclosure will be described with reference to Fig. 9. Fig. 9 is a block diagram schematically showing the configuration of the measurement device according to the third exemplary embodiment of the present disclosure. The object 10 shown in Fig. 1 is omitted. A measurement device 100C shown in Fig. 9 differs from the measurement device 100A shown in Fig. 1 in that the measurement device 100C includes a fifth beam splitter 32e and a second photodetector 50b. The fifth beam splitter 32e is located between the optical circulator 34 and the optical element 40 and is connected to both of them. The second photodetector 50b is connected to the fifth beam splitter 32e. It can also be said that the optical element 40 is connected to the optical circulator 34 via the fifth beam splitter 32e. The first photodetector 50a is the same as the photodetector 50 shown in Fig. 1. In the present specification, the first photodetector 50a is also referred to as "a photodetector", and the second photodetector 50b is also referred to as "another photodetector".

The fifth beam splitter 32e inputs part of the irradiation light 20L2 from the third terminal 32a3 of the first beam splitter 32a to the optical element 40 to the second photodetector 50b as monitoring light 20L5. The second photodetector 50b detects the monitoring light 20L5. The output of the monitoring light 20L5 may be, for example, 5% or less of the output of the irradiation light 20L2 emitted from the optical element 40 to the outside. The detection signal of the second photodetector 50b can be used for various purposes. For example, the detection signal of the second photodetector 50b may be used as a monitoring signal for controlling the operation of the light source 20 so that the irradiation light 20L2 emitted to the outside does not exceed the eye-safe standard. The eye-safe standard may be, for example, 10 mW. When the purpose is eye safety, because the irradiation light 20L2 is emitted to the outside from the optical element 40, it is desirable to use the light near the optical element 40 as the monitoring light 20L5, as shown in Fig. 9.

In the FMCW-LiDAR technology, the frequency of the laser beam 20L0 emitted from the light source 20 is periodically modulated. If a laser diode capable of emitting a high-power laser beam is used as the light source 20, such frequency modulation can be stably performed. Note that, because the light source 20 can emit a high-power laser beam, the output of the laser beam 20L0 may exceed the eye-safe standard due to, for example, a failure or a malfunction. The processing circuit 60 controls the operation of the light source 20 on the basis of the detection signal from the second photodetector 50b such that the output of the laser beam 20L0 does not exceed the eye-safe standard.

[Operation Performed by Processing Circuit 60]

Next, an example operation performed by the processing circuit 60 in the third embodiment will be described with reference to Fig. 10. Fig. 10 is a flowchart schematically showing an example measurement operation performed by the processing circuit 60. The processing circuit 60 performs the operations of steps S201 to S206 shown in Fig. 10.

<Steps S201, S204, and S205>

The operations in steps S201, S204, and S205 are the same as the operations in steps S101 to S103 shown in Fig. 3, respectively.

<Step S202>

The processing circuit 60 causes the second photodetector 50b to detect the monitoring light 20L5.

<Step S203>

The processing circuit 60 determines whether or not the output of the irradiation light 20L2 emitted from the optical element 40 to the outside is less than or equal to the eye-safe standard on the basis of the output of the monitoring light 20L5. In the calibration of the measurement device 100C, by associating the output of the monitoring light 20L5 with the output of the irradiation light 20L2 emitted to the outside, it is possible to know, from the output of the monitoring light 20L5, the output of the irradiation light 20L2 emitted to the outside. When the determination is Yes, the processing circuit 60 executes the operations of steps S204 and S205. When the determination is No, the processing circuit 60 executes the operation of step S206.

<Step S206>

The processing circuit 60 causes the light source 20 to stop emitting the laser beam 20L0.
As a result of the above-described operation of the processing circuit 60, the distance and/or the speed of the object 10 can be measured with the irradiation light 20L2 having the power less than or equal to the eye-safe standard.

[Flow of Light in Measurement Device 100C]

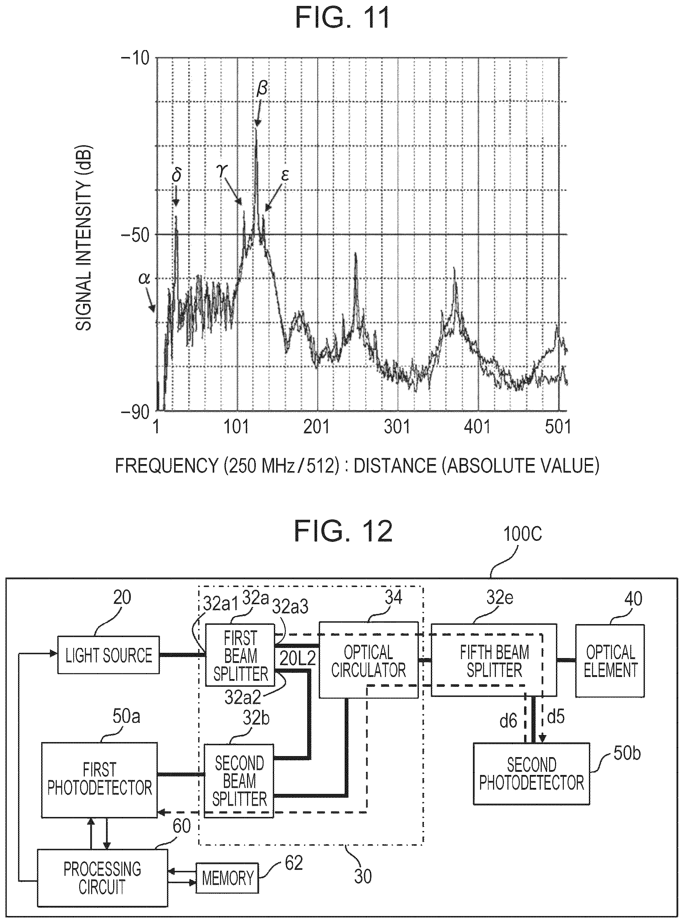

Reference is made to Fig. 9 again. In the measurement device 100C shown in Fig. 9, a flow of light $\varepsilon$ shown in Fig. 9 exists in addition to the flows of light $\alpha$ to $\delta$ shown in Fig. 1. Note that the flows of light $\beta$ and $\gamma$ pass through the fifth beam splitter 32e shown in Fig. 9. The flow of light $\varepsilon$ is the flow of the irradiation light 20L2 leaving the third terminal 32a3 of the first beam splitter 32a, reflected by the second photodetector 50b, and reaching the first photodetector 50a. The flow of light $\varepsilon$ causes noise in the detection signal.
Hereinbelow, referring to Fig. 11, it will be described, with a comparative example, that the flow of light $\varepsilon$ can reduce the distance measurement range even when the relationships of Formulas (7) to (9) are satisfied. In the comparative example, the distance of the object 10 was measured with the following measurement device. The measurement device includes the components shown in Fig. 9, but does not satisfy the conditions (to be described below) for reducing the influence of light reflected by the second photodetector 50b.
Fig. 11 is a graph showing a spectrum of a detection signal in the comparative example. The vertical axis and the horizontal axis shown in Fig. 11 are the same as the vertical axis and the horizontal axis shown in Fig. 4, respectively. As shown in Fig. 11, a plurality of peaks appear in the spectrum of the detection signal. Arrows shown in Fig. 11 indicate five representative peaks among them. The peaks $\alpha$ to $\delta$ have been described with reference to Fig. 4. The peak $\varepsilon$ has the beat frequency obtained by interference between the reference light 20L1 and, of the irradiation light 20L2, light leaving the second photodetector 50b and reaching the first photodetector 50a. The peak $\varepsilon$ is noise and is caused by light, in the irradiation light 20L2, reflected by the second photodetector 50b. Because the relationships of Formulas (7) to (9) are satisfied, the beat frequency of the peak $\gamma$ is higher than the beat frequency of the peak $\delta$, and the beat frequency of the peak $\beta$ is higher than the beat frequency of the peak $\gamma$. The peak $\gamma$ serves as the indicator of zero distance. In contrast, the beat frequency of the peak $\varepsilon$ is higher than the beat frequency of the peak $\gamma$. Hence, when the peak $\varepsilon$ and the peak $\beta$ are close to each other, there is a problem in that the distance of the object 10 cannot be accurately measured in the frequency band near the peak $\varepsilon$.

[Conditions for Reducing Influence of Light Reflected by Second Photodetector 50b]

Referring to Fig. 12, the conditions to be satisfied by the measurement device 100C to solve the above problem will be described below. Fig. 12 is a diagram for explaining the optical path lengths between the components included in the measurement device 100C according to the third embodiment. The optical path length of a fifth path extending from the third terminal 32a3 of the first beam splitter 32a to the second photodetector 50b is assumed to be a fifth optical path length d5. The optical path length of a sixth path extending from the second photodetector 50b to the first photodetector 50a is assumed to be a sixth optical path length d6.
The flow of light $\varepsilon$ shown in Fig. 9 causes new noise, which does not appear in the first embodiment, in the detection signal. The optical path length of the flow of light $\varepsilon$ is the sum of the fifth optical path length and the sixth optical path length, that is, D' = d5 + d6. If the beat frequency of the peak $\gamma$ is higher than the beat frequency of the peak $\varepsilon$, the peak $\varepsilon$ and the peak $\beta$ are not close to each other. Thus, the distance measurement range of the object 10 can be increased. The conditions satisfied by the optical path lengths in the measurement device 100C according to the third embodiment are expressed by Formula (10) below.
[Math. 10]

$$|D - d1| \geq |D' - d1| \qquad (10)$$

Formula (8) means that the beat frequency of the peak $\gamma$ is higher than the beat frequency of the peak $\varepsilon$. Instead of Formula (10), Formula (11) may be used, where f3 is the beat frequency of the peak $\varepsilon$.
[Math. 11]

$$f1 \geq f3 \qquad (11)$$

As described above, in the measurement device 100C according to the third embodiment, the relationships of Formulas (10) and (11) are satisfied in addition to Formulas (7) to (9). Thus, it is possible to reduce the influence of light, in the irradiation light 20L2, reflected by the second photodetector 50b and to increase the distance measurement range.
In the measurement devices 100A, 110A, 100B, and 100C described above, optical fibers are used to connect the components. In a configuration in which a plurality of components are provided on a substrate, an optical waveguide may be used to connect the components. The optical waveguide may be formed by patterning a semiconductor material or a dielectric material using a microfabrication technology. Furthermore, the components and the optical waveguide may be integrated on the same substrate.
Furthermore, the components of the measurement devices 100A, 110A, 100B, and 100C described above may be combined as desired, as long as there is no contradiction.

Industrial Applicability

The measurement device according to the embodiments of the present disclosure can be used for a ranging system mounted on a vehicle such as an automobile, an unmanned aerial vehicle (UAV), or an automated guided vehicle (AGV), or for vehicle detection.

Reference Signs List

10 object
20 light source
20L0 laser beam
20L1 reference light
20L2 irradiation light
20L3 reflected light
20L4 interference light
30 interference optical system
32a first beam splitter
32a1 first terminal
32a2 second terminal
32a3 third terminal
32b second beam splitter
32c third beam splitter
32d fourth beam splitter
32e fifth beam splitter
34 optical circulator
40 optical element
40a first optical element
40b second optical element
40c third optical element
50 photodetector
50a first photodetector

50b second photodetector
60 processing circuit
62 memory
100A, 110A, 100B, 100C measurement device

**Claims**

1. A measurement device comprising:

   a light source;
   an interference optical system that separates light from the light source into reference light and irradiation light for irradiating an object and causes reflected light, generated by at least part of the irradiation light being reflected by the object, and the reference light to interfere with each other to generate interference light;
   at least one optical element that emits the at least part of the irradiation light and receives the reflected light; and
   a photodetector that detects the interference light, wherein
   the interference optical system includes a beam splitter having a first terminal to which the light from the light source is input, a second terminal from which the reference light is output, and a third terminal from which the irradiation light is output, and
   the measurement device satisfies relationships of
   [Math. 1]

$$d1 \leq D \quad (D = d2 + d3) \quad (1)$$

   [Math. 2]

$$|D - d1| \geq |d4 - d1| \quad (2)$$

   where

   d1 is an optical path length of a first path extending from the second terminal of the beam splitter to the photodetector,
   d2 is an optical path length of a second path extending from the third terminal of the beam splitter to the optical element,
   d3 is an optical path length of a third path extending from the optical element to the photodetector, and
   d4 is an optical path length of a fourth path extending from the third terminal of the beam splitter to the photodetector via a noise light path inside the interference optical system.

2. The measurement device according to claim 1, wherein

   the interference optical system includes an optical circulator,
   the optical circulator is connected to the third terminal of the beam splitter and the at least one optical element,
   the photodetector is connected to the second terminal of the beam splitter and the optical circulator, and
   the noise light path is a path passing through the optical circulator.

3. The measurement device according to claim 1, wherein

   the interference optical system includes another beam splitter,
   the other beam splitter is connected to the third terminal of the beam splitter and the at least one optical element,
   the photodetector is connected to the second terminal of the beam splitter and the other beam splitter, and
   the noise light path is a path passing through the other beam splitter.

4. The measurement device according to any one of claims 1 to 3, wherein

   the at least one optical element includes a plurality of optical elements, the plurality of optical elements each emitting part of the irradiation light, and
the plurality of optical elements each satisfy the relationships of Formulas (1) and (2).

5. A measurement device comprising:

a light source;
an interference optical system that separates light from the light source into reference light and irradiation light for irradiating an object and causes reflected light, generated by at least part of the irradiation light being reflected by the object, and the reference light to interfere with each other to generate interference light;
at least one optical element that emits the at least part of the irradiation light and receives the reflected light;
a photodetector that detects the interference light; and
another photodetector, wherein
the interference optical system includes a beam splitter having a first terminal to which the light from the light source is input, a second terminal from which the reference light is output, and a third terminal from which the irradiation light is output,
the other photodetector detects part of the irradiation light from the third terminal of the beam splitter to the optical element, and
the measurement device satisfies relationships of
[Math. 1]

$$d1 \leq D \quad (D = d2 + d3) \qquad (1)$$

[Math. 3]

$$|D - d1| \geq |D' - d1| \quad (D' = d5 + d6) \qquad (3)$$

where

d1 is an optical path length of a first path extending from the second terminal of the beam splitter to the photodetector,
d2 is an optical path length of a second path extending from the third terminal of the beam splitter to the optical element,
d3 is an optical path length of a third path extending from the optical element to the photodetector,
d5 is an optical path length of a fifth path extending from the third terminal of the beam splitter to the other photodetector, and
d6 is an optical path length of a sixth path extending from the other photodetector to the photodetector.

6. The measurement device according to any one of claims 1 to 5, further comprising a processing circuit that processes a signal output from the photodetector,
wherein the light source is capable of changing a frequency of the light.

7. A measurement device comprising:

a light source;
an interference optical system that separates light from the light source into reference light and irradiation light for irradiating an object and causes reflected light, generated by at least part of the irradiation light being reflected by the object, and the reference light to interfere with each other to generate interference light;
at least one optical element that emits the at least part of the irradiation light and receives the reflected light; and
a photodetector that detects the interference light,
wherein the measurement device satisfies a relationship of
[Math. 4]

$$f1 \geq f2 \qquad (4)$$

where

f1 is a beat frequency caused by interference between the reference light and, of the irradiation light, light reflected by the optical element and reaching the photodetector, and

f2 is a beat frequency caused by interference between the reference light and, of the irradiation light, light passing through a noise light path inside the interference optical system and reaching the photodetector.

8. The measurement device according to claim 7, wherein

the interference optical system includes an optical circulator that inputs the at least part of the irradiation light to the at least one optical element and inputs the reflected light to the photodetector, and

the noise light path is a path passing through the optical circulator.

9. The measurement device according to claim 7, wherein

the interference optical system includes another beam splitter,

the other beam splitter inputs the at least part of the irradiation light to the at least one optical element and inputs the reflected light to the photodetector, and

the noise light path is a path passing through the other beam splitter.

10. The measurement device according to any one of claims 7 to 9, wherein

the at least one optical element includes a plurality of optical elements, the plurality of optical elements each emitting part of the irradiation light, and

the plurality of optical elements each satisfy the relationship of Formula (4).

11. A measurement device comprising:

a light source;

an interference optical system that separates light from the light source into reference light and irradiation light for irradiating an object and causes reflected light, generated by at least part of the irradiation light being reflected by the object, and the reference light to interfere with each other to generate interference light;

at least one optical element that emits the at least part of the irradiation light and receives the reflected light;

a photodetector that detects the interference light; and

another photodetector that detects part of the irradiation light from the interference optical system to the optical element,

wherein the measurement device satisfies a relationship of

[Math. 5]

$$f1 \geq f3 \qquad (5)$$

where

f1 is a beat frequency caused by interference between the reference light and, of the irradiation light, light reflected by the optical element and reaching the photodetector, and

f3 is a beat frequency caused by interference between the reference light and, of the irradiation light, light leaving the other photodetector and reaching the photodetector.

12. The measurement device according to any one of claims 7 to 11, further comprising a processing circuit that processes a signal output from the photodetector,

wherein the light source is capable of changing a frequency of the light.

# FIG. 1

100A

20
32a1  32a3  34  40
32a  20L2
LIGHT SOURCE
20L0
FIRST BEAM SPLITTER
OPTICAL CIRCULATOR
OPTICAL ELEMENT
$\beta$  20L2
10
$\gamma$
32a2
$\beta$  20L3
32b  20L1
$\alpha$  $\delta$
50
20L4
PHOTODETECTOR
SECOND BEAM SPLITTER
30
60
20L3
PROCESSING CIRCUIT
MEMORY  62

# FIG. 2

REFERENCE LIGHT

REFLECTED LIGHT

FREQUENCY

TIME

# FIG. 3

START

↓

CAUSE LIGHT SOURCE TO
EMIT LASER BEAM — S101

↓

CAUSE PHOTODETECTOR TO
DETECT INTERFERENCE LIGHT — S102

↓

GENERATE MEASUREMENT DATA
REGARDING DISTANCE AND/OR SPEED — S103

↓

END

# FIG. 4

FREQUENCY (250 MHz / 512) : DISTANCE (ABSOLUTE VALUE)

# FIG. 5

# FIG. 6

FREQUENCY (250 MHz/512) : DISTANCE (ABSOLUTE VALUE)

# FIG. 7

# FIG. 8

FIG. 9

FIG. 10

# FIG. 11

FREQUENCY (250 MHz / 512) : DISTANCE (ABSOLUTE VALUE)

# FIG. 12

# EP 4 471 452 A1

<table>
<tr><td colspan="2" style="text-align:left">INTERNATIONAL SEARCH REPORT</td><td>International application No.<br><br>**PCT/JP2022/041785**</td></tr>
</table>

**A. CLASSIFICATION OF SUBJECT MATTER**

*G01S 7/481*(2006.01)i; *G01S 17/34*(2020.01)i
FI: G01S7/481 A; G01S17/34

According to International Patent Classification (IPC) or to both national classification and IPC

**B. FIELDS SEARCHED**

Minimum documentation searched (classification system followed by classification symbols)

G01S7/48-7/51; G01S17/00-17/95

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2010-127840 A (MITSUBISHI ELECTRIC CORP) 10 June 2010 (2010-06-10)<br>entire text, all drawings | 1-12 |
| A | JP 2009-525838 A (THE GENERAL HOSPITAL CORPORATION) 16 July 2009 (2009-07-16)<br>entire text, all drawings | 1-12 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **15 December 2022** | **10 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/041785**

| Patent document cited in search report | | | Publication date (day/month/year) | Patent family member(s) | Publication date (day/month/year) |
|---|---|---|---|---|---|
| JP | 2010-127840 | A | 10 June 2010 | (Family: none) | |
| JP | 2009-525838 | A | 16 July 2009 | US 2007/0233056 A1 entire text, all drawings | |

Form PCT/ISA/210 (patent family annex) (January 2015)

**REFERENCES CITED IN THE DESCRIPTION**

**Patent documents cited in the description**

- JP 6274368 B
- JP 2019045200 A